(19) Europäisches Patentamt
European Patent Office
Office européen des brevets

(11) **EP 0 961 422 B1**

(12) **FASCICULE DE BREVET EUROPEEN**

(45) Date de publication et mention
de la délivrance du brevet:
**20.07.2005 Bulletin 2005/29**

(51) Int Cl.⁷: **H04B 10/00**, H04B 10/155

(21) Numéro de dépôt: **99201609.7**

(22) Date de dépôt: **21.05.1999**

(54) **Emetteur optiques utilisant plusieurs sources optiques**

Optischer Sender mit mehreren optischen Quellen

Optical transmitter using several optical sources

(84) Etats contractants désignés:
**DE FR GB**

(30) Priorité: **29.05.1998 FR 9806827**

(43) Date de publication de la demande:
**01.12.1999 Bulletin 1999/48**

(73) Titulaire: **BROADBAND ROYALTY CORPORATION**
**Wilmington, Delaware 19801 (US)**

(72) Inventeurs:
• **Dubos, Laurent**
**75008 Paris (FR)**
• **Dumont, Francois**
**75008 Paris (FR)**

(74) Mandataire: **Beyer, Andreas, Dr. et al**
**Wuesthoff & Wuesthoff,**
**Patent- und Rechtsanwälte,**
**Schweigerstrasse 2**
**81541 München (DE)**

(56) Documents cités:
**EP-A- 0 410 757        FR-A- 2 524 229**
**US-A- 4 775 971**

• **PATENT ABSTRACTS OF JAPAN vol. 008, no. 127 (E-250), 14 juin 1984 (1984-06-14) & JP 59 037747 A (NIPPON DENKI KK), 1 mars 1984 (1984-03-01)**
• **PATENT ABSTRACTS OF JAPAN vol. 009, no. 150 (E-324), 25 juin 1985 (1985-06-25) & JP 60 031324 A (NIPPON DENKI KK), 18 février 1985 (1985-02-18)**

# Description

La présente invention concerne un émetteur optique comportant an moins deux sources optiques disposées en série et attaquées simultanément, et des moyens pour alimenter lesdites sources optiques séparément en courant de polarisation continu et pour les alimenter en série en courant de modulation alternatif, le passage des courants continus distincts polarisant les sources optiques étant réalisé via au moins deux inductances de valeur suffisante pour bloquer pratiquement le passage du courant alternativ de modulation. Il comporte un coupleur optique recevant la puissance émise par chacune des deux sources optiques et répartissant cette puissance entre deux fibres optiques constituant un point de départ d'un réseau de transmission optique à la large bande. L'invention s'applique notamment aux réseaux de vidéocommunication et aux voies de retour de ces réseaux.

Un émetteur optique selon le préambule ci-dessus est connu du document PATENTS ABSTRACT OF JAPAN vol 008, no 127, 14 juin 1984. Selon ce document, plusieurs diodes sont connectées en série, et des moyens sont prévus pour alimenter les sources optiques séparément en courant de polarisation continu et en courant de modulation alternatif, le passage des courants continus étant réalisé via des inductances.

On notera que la demande de brevet d'invention FR-2 524 229 décrit un système de transmission optique à large bande comportant une source lumineuse principale, une source lumineuse produisant un signal de distorsion, un coupleur d'entrée destiné à recevoir les signaux émis par ces deux sources, et à les amener tous les deux à l'entrée d'une même fibre optique du système de transmission. Dans ce document, la fonction du coupleur est d'amener la puissance produite par les deux sources lumineuses sur une même fibre optique.

L'utilisation d'un coupleur optique pour recevoir le signal optique de différentes sources et le repartir sur plusieurs fibres constituant un point de départ d'un réseau optique est connu de US 4 775 971.

Un objet de l'invention est d'obtenir une fiabilité accrue du réseau de transmission.

A cet effet, l'émetteur optique comprend un condensateur de couplage entre les deux sources optiques, une première source optique recevant le signal modulant sur l'une de ses électrodes puis transmettant le signal modulant à une seconde source optique par l'intermédiaire du dit condensateur de couplage.

Des modes particuliers de réalisation de l'invention plus détaillés apparaîtront plus clairement grâce à la description suivante de plusieurs modes de réalisation constituant des exemples non limitatifs.

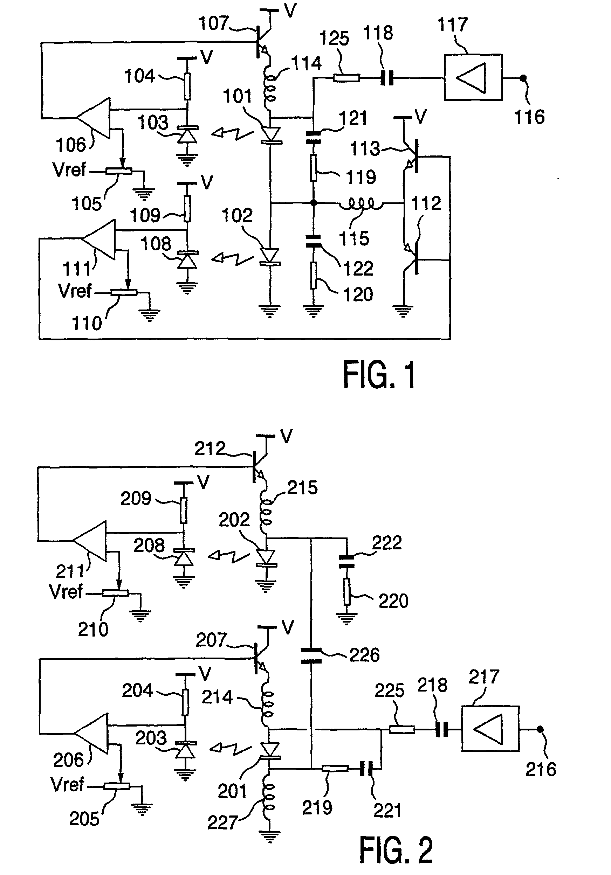

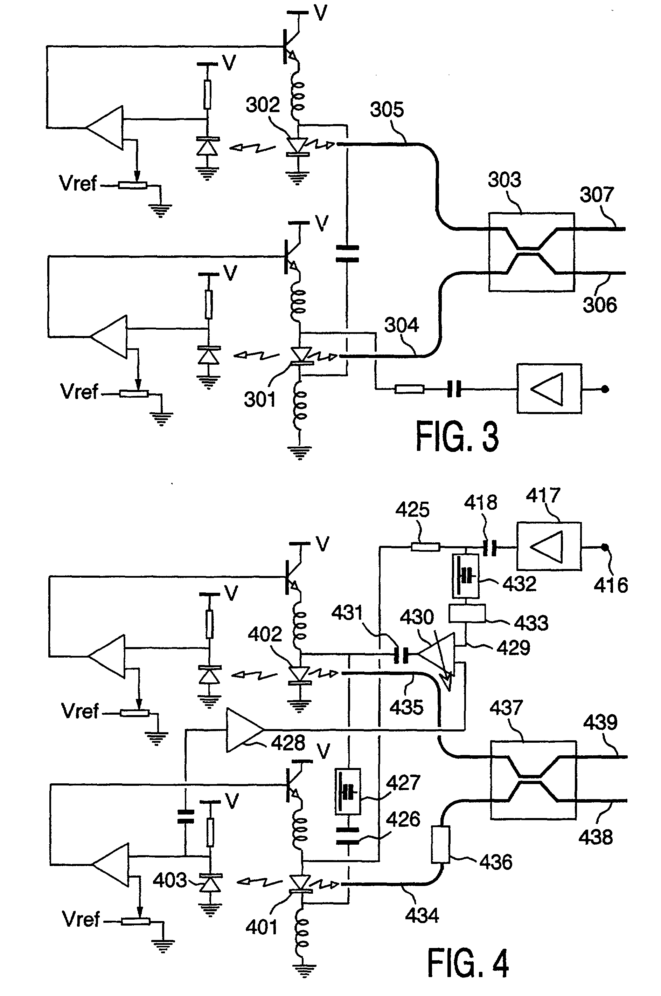

Les figures 1 et 3 sont des schémas électriques illustrant des modes de réalisation de l'invention.

La figure 1 présente un premier mode de réalisation, comportant deux sources optiques 101 et 102 connectées directement en série. Les sources sont des diodes laser, toutefois une réalisation à base de diodes électroluminescentes est également possible.

La puissance optique émise par la diode laser 101 est maintenue constante grâce à une boucle de contre-réaction comprenant une photodiode 103 qui reçoit la puissance optique émise par la face arrière de la diode laser 101. La photodiode 103 est incluse dans un circuit en pont constitué par une résistance 104 ainsi que par un potentiomètre 105. Un amplificateur différentiel 106 amplifie le signal de déséquilibre du pont et contrôle le courant moyen traversant la diode laser 101 par l'intermédiaire du transistor 107, de façon connue.

De même, la puissance optique moyenne émise par la diode laser 102 est maintenue constante grâce à une autre boucle de contre-réaction dont les éléments 108 à 111 correspondent respectivement aux éléments 103 à 106 du circuit de régulation de la diode 101. Le courant moyen traversant la diode laser 102 est contrôlé par deux transistors 112 et 113. Si le transistor 113 conduit, il ajoute du courant au courant venant de la diode 101 ; si c'est le transistor 112 qui conduit, il absorbe une partie du courant venant de la diode 101 : ceci permet de rendre indépendantes l'une de l'autre les valeurs des courants de polarisation dans les diodes 101 et 102.

Des inductances 114 et 115 interdisent le passage du courant alternatif de modulation à travers les circuits destinés à conduire le courant continu de polarisation des lasers. Ainsi il est possible de régler indépendamment la puissance optique émise par chacun des lasers à l'aide des potentiomètres de réglage 105 et 110.

Un signal modulant est appliqué à l'entrée 116 de l'émetteur, traverse des moyens d'amplification 117, puis est appliqué via un condensateur de liaison 118 à l'ensemble des deux sources optiques 101 et 102 disposées en série. L'adaptation d'impédance entre la sortie de l'amplificateur 117 et l'ensemble des sources optiques est obtenue soit par l'insertion d'une résistance 125 ajoutée en série avec les sources optiques, soit d'une autre façon connue, par exemple à l'aide d'un transformateur élévateur d'impédance, non représenté. La mise en série des sources optiques facilite cette adaptation car l'impédance d'une source optique ou même de deux sources en série est toujours notablement inférieure à l'impédance des amplificateurs électroniques usuels : l'impédance d'une source optique étant en général de quelques ohms.

Il est possible d'utiliser un dipôle placé aux bornes de l'une ou de l'autre des sources optiques, par exemple formé d'une résistance 119 et d'un condensateur 121, ou formé d'une résistance 120 et d'un condensateur 122, pour égaliser le rendement de conversion électrique - optique de chacune des deux sources optiques.

Il est bien entendu possible de disposer plus de deux sources optiques en série. La méthode pour alimenter les sources, tant du point de vue du courant moyen de polarisation que du point de vue du courant alternatif de modulation serait la même que précédemment. L'adaptation des sources à l'impédance de sortie d'un amplificateur serait encore plus facile.

La figure 2 présente un second mode de réalisation, comportant deux diodes laser 201 et 202. La puissance optique émise par chacune des diodes laser 201 et 202 est maintenue constante et rendue réglable grâce à deux boucles de contre-réaction constituées de manière identique à celles du schéma de la figure 1. Des inductances 214 et 215 interdisent le passage du courant alternatif de modulation à travers les circuits destinés à conduire le courant continu de polarisation des lasers. Dans le cas où les sources optiques seraient des diodes électroluminescentes, ces dernières seraient alimentées séparément.

Le signal modulant est appliqué à l'entrée 216 de l'émetteur, traverse les moyens d'amplification 217, puis est appliqué, par l'intermédiaire d'un condensateur de liaison 218, à l'ensemble des deux sources optiques 201 et 202 disposées en série au regard du signal alternatif modulant grâce à la présence du condensateur 226 et de l'inductance 227. L'adaptation d'impédance entre la sortie de l'amplificateur 217 et l'ensemble des sources optiques est obtenue par l'insertion d'une résistance 225. Comme précédemment, il est possible d'ajuster l'efficacité de conversion du courant électrique en puissance optique de l'une ou l'autre des deux sources optiques en mettant en circuit un dipôle formé d'une résistance 219 et d'un condensateur 221, ou un dipôle formé d'une résistance 220 et d'un condensateur 222.

Le circuit de la figure 2 présente les mêmes caractéristiques que celui de la figure 1 avec l'avantage pratique supplémentaire qu'il permet d'obtenir un potentiel continu nul sur le boîtier de chacun des deux lasers, ce qui élimine les risques de court-circuit accidentel, le boîtier des diodes laser étant le plus souvent relié électriquement à l'une des électrodes. De plus, ce circuit permet d'optimiser la réponse en fréquence de l'ensemble du circuit. En effet, l'inductance 227 se trouve placée en parallèle avec la capacité parasite de la diode laser 202 et constitue de ce fait un circuit anti-résonant à faible coefficient de surtension. Il est donc possible de compenser une éventuelle chute de la réponse en fréquence en ajustant la valeur de l'inductance 227 de façon à obtenir l'anti-résonance à la fréquence pour laquelle l'on désire rehausser l'efficacité de l'émetteur.

Il est avantageux d'ajouter un coupleur optique en sortie des sources optiques dans le mode de réalisation précédent. La figure 3 présente le schéma d'un émetteur tout à fait semblable à celui de la figure 2 comportant deux diodes laser 301 et 302. Ici chacune des diodes envoie de la lumière dans une fibre amorce respectivement 304 et 305 émettant vers deux fibres optiques 306 et 307 par l'intermédiaire d'un coupleur optique 303. Le coupleur optique a pour fonction de répartir entre les deux fibres 306 et 307 la puissance optique émise par les deux diodes laser, chacune des fibres recevant sensiblement la moitié de la puissance émise par chacune des diodes. Chacune des fibres optiques 306 et 307 transporte les signaux optiques vers un ou plusieurs récepteurs optiques distants, constituant ainsi le point de départ d'un réseau de transmission optique. Il est clair que le nombre des sources aussi bien que le nombre des fibres peut être augmenté.

Afin d'éviter les problèmes éventuels liés d'une part à la dispersion chromatique dans la fibre, d'autre part aux interférences possibles entre le rayonnement émis par chacun des lasers si les longueurs d'onde de ces derniers sont trop proches l'une de l'autre, il importe de s'assurer que la différence des longueurs d'onde d'émission des lasers est compatible avec une qualité de transmission acceptable des signaux. Au besoin il est possible d'agir sur le courant continu de polarisation ou sur la température de l'un ou l'autre des lasers afin de satisfaire à la condition énoncée ci-dessus en ce qui concerne les longueurs d'onde d'émission.

Un avantage du schéma de la figure 3 réside dans une fiabilité accrue. En cas de panne de l'un des lasers, l'émetteur optique continue à fonctionner avec une puissance optique réduite. En effet, en cas de défaillance, une diode laser ou une diode électroluminescente présente le plus souvent une faible impédance et la présence de la diode défaillante ne constitue pas un obstacle au bon fonctionnement de l'autre diode. Ainsi la défaillance d'une source optique sur deux se traduit simplement par une diminution de 3 dB du signal optique reçu par chacun des récepteurs présents dans le réseau. L'accroissement de fiabilité ainsi obtenu est intéressant car la diode laser est le composant le plus souvent défaillant dans un émetteur optique, et le surcoût consenti en échange de cette fiabilité accrue est moindre que le coût d'une solution traditionnelle basée sur l'utilisation de deux émetteurs complets dont l'un est employé en secours en cas de défaillance de l'autre.

La figure 4 présente un autre exemple comportant deux sources optiques 401 et 402. Les sources laser sont ici encore munies d'une boucle de contre-réaction comportant une photodiode de contrôle, ce qui permet d'ajuster la puissance optique émise. Le signal modulant est appliqué à l'entrée 416 de l'émetteur optique, traverse les moyens d'amplification 417, puis est appliqué via un condensateur de liaison 418 à la source optique 401 à travers la résistance d'adaptation 425. Le signal modulant est ensuite transmis à la seconde source optique 402 par l'intermédiaire du condensateur de liaison 426 ainsi que d'une ligne à retard 427. D'autre part, la composante alternative du signal provenant de la photodiode 403 est amplifiée séparément de la composante continue par un amplificateur 428. Le signal de sortie de l'amplificateur 428 est dirigé vers une entrée d'un l'amplificateur différentiel 430 à gain réglable, qui reçoit sur son autre entrée 429 un signal égal au signal présent à l'entrée 416 de l'émetteur optique mais retardé par l'action d'une ligne à retard 432, et atténué par un atténuateur 433. Ainsi un « signal d'erreur » est disponible en sortie de l'amplificateur différentiel 430, proportionnel à la distorsion et au bruit qui affectent le signal optique émis par la diode laser 401 et présentant une polarité inverse de cette distorsion et de ce bruit, sous réserve d'une affectation convenable des bornes d'entrée de l'amplificateur différentiel 430. Ce signal d'erreur est alors transmis, via un condensateur 431, à la seconde diode laser 402. De cette manière la diode laser 402 est alimentée par la somme de deux courants :

- un courant venant de la ligne à retard 427 et qui est proportionnel au signal appliqué à l'entrée 416 de l'émetteur optique
- un courant d'erreur provenant du condensateur 431 et proportionnel, au signe près, à la distorsion et au bruit générés par la diode laser 401.

La sommation des deux signaux précédents peut être obtenue par simple connexion des deux conducteurs transportant ces signaux, ce qui est le cas sur la figure, ou par l'emploi d'un coupleur directionnel ou par tout autre moyen connu.

Les diodes laser 401 et 402 envoient de la lumière dans des fibres amorces respectivement 434 et 435. La fibre amorce 434 comporte un élément de retard optique 436 constitué d'une longueur de fibre en excès dont la longueur est ajustée de manière à ce que le retard subi par la lumière à la traversée de cette longueur en excès soit égale au retard subi par le signal électrique lors de la traversée de la ligne à retard 427 de telle sorte que les signaux optiques émis par chacune des diodes laser se présentent en phase aux entrées du coupleur optique 437. Il est alors possible de compenser le bruit ou la distorsion générée par la diode laser 401, grâce à un réglage adapté du gain de l'amplificateur différentiel 430, lorsque le retard subi par le signal lors de la traversée de la chaîne de traitement située entre la photodiode 403 et le condensateur 431 est égal au retard de la ligne à retard électrique 427 et également à celui de la ligne à retard optique 436.

La caractéristique de la diode laser 401 étant décrite par la relation suivante entre le courant I et la puissance émise $P_1$ :

$P_1 = \eta.I + a_1.I^2 + b_1.I^3$, dans laquelle $\eta$, $a_1$, $b_1$ sont des coefficients, et la caractéristique de la diode laser 402 étant décrite par la relation suivante entre le courant I et la puissance émise $P_2$ :

$P_2 = \eta.I + a_2.I^2 + b_2.I^3$, dans laquelle $a_2$, $b_2$ sont des coefficients, et en appelant G le gain de l'amplificateur différentiel 430, le signal en sortie de l'amplificateur différentiel 430, c'est-à-dire le signal d'erreur, vaut :

$$E = - G. a_1.I^2 + b_1.I^3$$

dans ces conditions, il est possible d'annuler la distorsion d'ordre 2 en sortie de l'émetteur optique à condition de donner au gain G la valeur $G = 1 + a_2 / a_1$, de même,

il est possible d'annuler la distorsion d'ordre 3 en sortie de l'émetteur optique à condition de donner au gain de l'amplificateur différentiel 430 la valeur $G = 1 + b_2 / b_1$. Enfin il est possible de minimiser le bruit en sortie de l'émetteur optique à condition de donner au gain de l'amplificateur différentiel 430 la valeur $G = 1$.

Il est ainsi possible de choisir le gain de l'amplificateur différentiel 430 de façon à minimiser soit le bruit, soit la distorsion d'ordre 2, soit la distorsion d'ordre 3, à condition d'ajuster convenablement les différents retards et de prendre les mesures mentionnées plus haut contre les effets éventuels de la dispersion chromatique dans les fibres et contre les interférences possibles entre les rayonnements émis par chacun des lasers.

Après traversée du coupleur optique 437, la puissance optique émise par chacun des lasers se trouve répartie entre les deux fibres 438 et 439. Comme précédemment, il est clair que le nombre de fibre issues du coupleur optique et constituant le réseau n'est pas nécessairement limité à deux.

Sur les schémas des figures 1 à 4, la cathode de la diode laser est supposée réunie au boîtier. Si l'anode était reliée au boîtier, il suffirait de changer la polarité des sources d'alimentation et la polarité des transistors utilisés.

## Revendications

1. Emetteur optique comportant au moins deux sources optiques (301, 302) connectées directement en série et attaquées simultanément, et des moyens pour alimenter lesdites sources optiques séparément en courant de polarisation continu et pour les alimenter en série en courant de modulation alternatif, le passage des courants continus distincts polarisant les sources optiques étant réalisé via au moins deux inductances (214, 215) de valeur suffisante pour bloquer le passage du courant alternatif de modulation, ledit émetteur optique comportant un coupleur optique (303, 437) recevant la puissance émise par chacune des deux sources optiques et répartissant cette puissance entre deux fibres optiques (306, 307) constituant un point de départ d'un réseau de transmission optique à large bande, ledit émetteur optique étant **caractérisé en ce qu'**il comprend un montage push-pull (112, 113) dont la sortie est reliée au point commun entre les sources optiques, de façon à ajouter ou retrancher du courant dans une des sources optiques.

2. Emetteur optique selon la revendication 1, **caractérisé en ce qu'**il comprend un condensateur de couplage (226) entre les deux sources optiques, une première source optique (201) recevant le signal modulant sur l'une de ses électrodes puis transmettant le signal modulant à une seconde source optique (202) par l'intermédiaire du dit condensateur de couplage.

3. Emetteur optique selon la revendication 2, **caractérisé en ce qu'**il comporte une inductance (227) assurant le retour vers la masse du courant continu polarisant la première source optique.

4. Emetteur optique selon la revendication 1, **caractérisé en ce que** les sources optiques sont des diodes laser.

5. Emetteur optique selon la revendication 1, **caractérisé en ce que** les sources optiques sont des diodes électroluminescentes.

6. Emetteur optique selon la revendication 1, **caractérisé en ce qu'**il comporte des moyens (416, 429, 430, 432, 433) pour comparer le signal optique de modulation émis par la première source optique à une réplique convenablement retardée du signal présent à l'entrée de l'émetteur, afin d'élaborer un signal d'erreur proportionnel à la distorsion et au bruit qui affectent le signal optique émis par la première source optique.

7. Emetteur optique selon la revendication 6, **caractérisé en ce qu'**il comporte des moyens pour alimenter la seconde source optique (402) par la somme du signal d'erreur et du signal à transmettre, des moyens (427) pour retarder ce dernier de façon à corriger aussi exactement que possible le signal émis par la première source optique (401), et des moyens pour combiner les signaux optiques provenant de chacune des deux sources (401, 402) après addition d'un retard convenable, au moyen dudit coupleur optique (437).

8. Emetteur optique selon la revendication 7, **caractérisé en ce qu'**il comporte des moyens (430) de réglage d'amplification du signal d'erreur.

**Patentansprüche**

1. Optischer Sender mit wenigstens zwei optischen Quellen (301, 302), die direkt hintereinander geschaltet sind und auf die gleichzeitig zugegriffen wird, und Mitteln, um die optischen Quellen getrennt mit Polarisationsgleichstrom und in Reihe mit Modulationswechselstrom zu speisen, wobei der Durchfluss der die optischen Quellen polarisierenden, separaten Gleichströme über wenigstens zwei induktive Widerstände (214, 215) erfolgt, deren Wert ausreicht, um den Durchgang des Modulatonswechselstroms zu sperren, wobei der optische Sender einen Optokoppler (303, 437) umfasst, der die Leistung abnimmt, die von jeder der beiden optischen Quellen abgegeben wird, und diese zwischen zwei Lichtwellenleitern (306, 307) verteilt, die einen Ausgangspunkt eines breitbandigen optischen Übertragungsnetzes bilden, wobei der optische Sender **dadurch gekennzeichnet ist, dass** er eine Gegentaktschaltung (112, 113) umfasst, deren Ausgang mit dem gemeinsamen Punkt zwischen den optischen Quellen derart verbunden ist, dass einer der optischen Quellen Strom hinzugefügt oder abgeschnitten wird.

2. Optischer Sender nach Anspruch 1, **dadurch gekennzeichnet, dass** er einen Koppelkondensator (226) zwischen den beiden optischen Quellen umfasst, wobei eine erste optische Quelle (201) auf einer ihrer Elektroden das Modulationssignal empfängt und anschließend das Modulationssignal mit Hilfe des Koppelkondensators an eine zweite optische Quelle (202) überträgt.

3. Optischer Sender nach Anspruch 2, **dadurch gekennzeichnet, dass** er einen induktiven Widerstand (227) aufweist, der die Rückleitung des die erste optische Quelle polarisierenden Gleichstroms zur Masse gewährleistet.

4. Optischer Sender nach Anspruch 1, **dadurch gekennzeichnet, dass** die optischen Quellen Laserdioden sind.

5. Optischer Sender nach Anspruch 1, **dadurch gekennzeichnet, dass** die optischen Quellen Leuchtdioden sind.

6. Optischer Sender nach Anspruch 1, **dadurch gekennzeichnet, dass** er Mittel (416, 429, 430, 432, 433) zum Vergleichen des von der ersten optischen Quelle abgegebenen optischen Modulationssignals mit einer entsprechend verzögerten Antwort des am Eingang des Senders vorhandenen Signals aufweist, um ein Fehlersignal zu erstellen, das zur Verzerrung und zum Rauschen proportional ist, welche bei dem optischen Signal auftreten, das von der ersten optischen Quelle abgegeben wird.

7. Optischer Sender nach Anspruch 6, **dadurch gekennzeichnet, dass** er Mittel aufweist, um die zweite optische Quelle (402) durch die Summe von Fehlersignal und zu übertragendem Signal zu speisen, sowie Mittel (427), um letzteres Signal derart zu verzögern, dass das von der ersten optischen Quelle (401) abgegebene Signal so genau wie möglich korrigiert wird, und Mittel, um die von jeder der beiden Quellen (401, 402) stammenden optischen Signale mit Hilfe des Optokopplers (437) nach Hinzufügen einer entsprechenden Verzögerung zu kombinieren.

**8.** Optischer Sender nach Anspruch 7, **dadurch gekennzeichnet, dass** er Mittel (430) zum Regeln der Verstärkung des Fehlersignals umfasst.

## Claims

**1.** Optical emitter comprising at least two optical sources (301, 302) connected directly in series and driven simultaneously, and means for supplying the said optical sources separately with continuous bias current and for supplying them in series with alternating modulation current, the separate continuous currents biasing the optical sources flowing through at least two inductances (214, 215) having a sufficient value to block the flow of the alternating modulation current, the said optical emitter comprising an optical coupler (303, 437) receiving the power emitted by each of the two optical sources and distributing this power between two optical fibres (306, 307) forming a starting point of a broadband optical transmission system, the said optical emitter being **characterized in that** it comprises a push-pull circuit (112, 113) whose output is connected to the common point between the optical sources, so as to supply current to, or withdraw it from, one of the optical sources.

**2.** Optical emitter according to Claim 1, **characterized in that** it comprises a coupling capacitor (226) between the two optical sources, a first optical source (201) receiving the modulating signal on one of its electrodes and then transmitting the modulating signal to a second optical source (202) via the said coupling capacitor.

**3.** Optical emitter according to Claim 2, **characterized in that** it comprises an inductance (227) for returning to earth the continuous current biasing the first optical source.

**4.** Optical emitter according to Claim 1, **characterized in that** the optical sources are laser diodes.

**5.** Optical emitter according to Claim 1, **characterized in that** the optical sources are light-emitting diodes.

**6.** Optical emitter according to Claim 1, **characterized in that** it comprises means (416, 429, 430, 432, 433) for comparing the optical modulating signal emitted by the first optical source with a suitably delayed replica of the signal present at the input of the emitter, in order to generate an error signal proportional to the distortion and noise which affect the optical signal emitted by the first optical source.

**7.** Optical emitter according to Claim 6, **characterized in that** it comprises means for supplying the second optical source (402) with the sum of the error signal and the signal to be transmitted, means (427) for delaying the latter so as to correct as precisely as possible the signal emitted by the first optical source (401), and means for combining the optical signals received from each of the two sources (401, 402) after the addition of a suitable delay, by means of the said optical coupler (437).

**8.** Optical emitter according to Claim 7, **characterized in that** it comprises means (430) for adjusting the amplification of the error signal.

FIG. 1

FIG. 2

FIG. 3

FIG. 4